# EUROPEAN PATENT SPECIFICATION

(11) **EP 3 123 759 B1**
(45) Date of publication and mention of the grant of the patent: **01.05.2019**
(21) Application number: 14887644.4
(22) Date of filing: 27.03.2014
(51) Int. Cl.: H04W 74/08, H04W 84/12

(54) **METHOD, APPARATUS AND SYSTEM FOR DISTRIBUTING TRANSMISSION OPPORTUNITIES IN A WIRELESS COMMUNICATION NETWORK**
VERFAHREN, VORRICHTUNG UND SYSTEM ZUR VERTEILUNG VON ÜBERTRAGUNGSCHANCEN IN EINEM DRAHTLOSKOMMUNIKATIONSNETZWERK
PROCÉDÉ, APPAREIL ET SYSTÈME POUR DISTRIBUER DES OPPORTUNITÉS DE TRANSMISSION DANS UN RÉSEAU DE COMMUNICATION SANS FIL

(43) Date of publication of application: 01.02.2017
(73) Proprietor: Intel Corporation, Santa Clara, CA 95054 (US)
(72) Inventor: YANG, Rongzhen, Shanghai 31 200030 (CN); NIU, Huaning, San Jose, California 95120 (US); YIN, Hujun, Saratoga, California 95070 (US); STACEY, Robert J., Portland, Oregon 97210 (US)
(74) Representative: HGF Limited
(86) International application number: PCT/CN2014/074193
(87) International publication number: WO 2015/143668

(56) References cited:
- WO-A2-2007/029229
- CN-A- 102 119 565
- CN-A- 102 958 186
- CN-A- 103 001 689
- US-A1- 2011 222 408
- KATSUO YUNOKI (KDDI R&D LABORATORIES): "Access control enhancement ; 11-13-1073-01-0hew-access-control-enhancem ent", IEEE DRAFT; 11-13-1073-01-0HEW-ACCESS-CONTROL-ENHANCEM ENT, IEEE-SA MENTOR, PISCATAWAY, NJ USA, vol. 802.11 HEW, no. 1, 18 September 2013 (2013-09-18), pages 1-10, XP068062975, [retrieved on 2013-09-18]

## Description

### TECHNICAL FIELD

Embodiments pertain to wireless networks. Some embodiments relate to Wi-Fi networks and networks operating in accordance with one of the IEEE 802.11 standards. Some embodiments relate to high-efficiency wireless or high-efficiency WLAN (HEW) communications.

### BACKGROUND

A recently-formed study group for Wi-Fi evolution referred to as the IEEE 802.11 High Efficiency WLAN (HEW) study group (SG) is addressing high-density deployment scenarios. HEWs may provide increased throughput in public locations such as airports and shopping malls in which high-density wireless access points (APs) serve overlapping service areas and in which user devices communicate using peer-to-peer communication mechanisms. However, levels of interference may be high under these scenarios, leading to deterioration in user quality of service

The document WO 2007/029229 A2 discloses media access methods using carrier-sensing and collision avoidance techniques to allow multiple network devices to perform collision free burst-like media access within shared transmission opportunities.

The invention is defined by the appendant claims.

### BRIEF DESCRIPTION OF THE DRAWINGS

FIG. 1 illustrates a High Efficiency WLAN (HEW) network in accordance with some embodiments;
FIG. 2 is a first illustrative example of a mechanism for sharing transmission opportunities (TXOPs) in accordance with some embodiments;
FIG. 3 is a second illustrative example of a mechanism for sharing TXOPs in accordance with some embodiments;
FIG. 4 is a third illustrative example of a mechanism for sharing TXOPs in accordance with some embodiments;
FIG. 5 is a fourth illustrative example of a mechanism for sharing TXOPs in accordance with some embodiments;
FIG. 6 is a flow chart of a method for sharing TXOPs in accordance with some embodiments; and
FIG. 7 illustrates a HEW device in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

A recently-formed study group for Wi-Fi evolution referred to as the Institute of Electrical and Electronics Engineers (IEEE) 802.11 High Efficiency WLAN (HEW) study group (SG), is studying enhancements for system efficiency in high-density wireless communication scenarios.

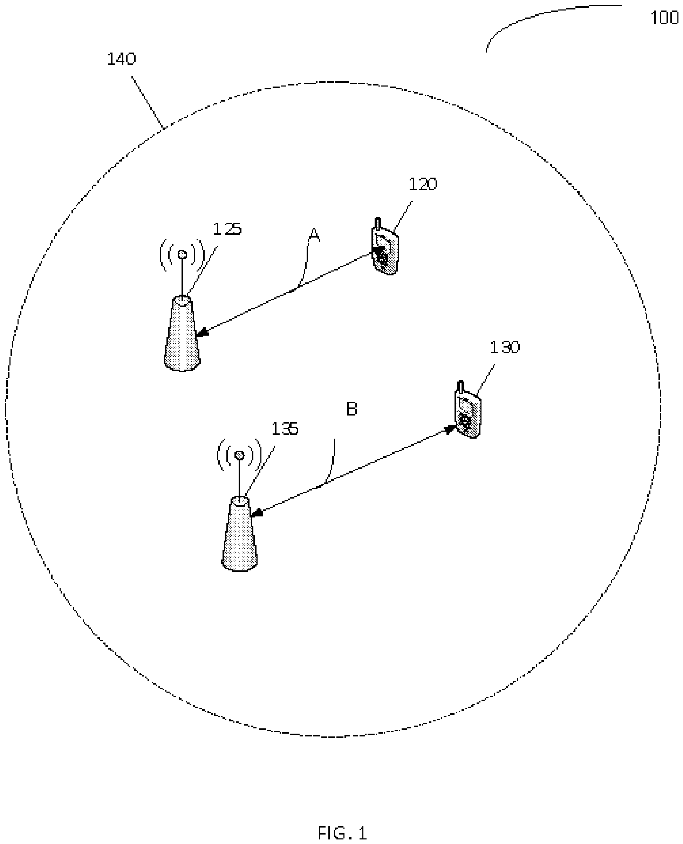

FIG. 1 illustrates a HEW network 100 in accordance with some embodiments. The HEW network 100 includes a HEW-compliant user wireless communication station (STA) 120. The HEW-compliant STA 120 may have a wireless connection through a STA 125. The STA 125 may be a more stationary communication unit such as a wireless access point (AP) and will hereinafter be referred to as the HEW AP 125. The HEW-compliant STA 120 and HEW AP 125 can form a communication Pair A. At least another HEW-compliant STA 130 can form a communication Pair B with another HEW AP 135. However, embodiments are not limited to a particular number of communication pairs, STAs, or APs. Other STAs (not shown in FIG. 1) can support HEW while some other STAs (not shown in FIG. 1) may not support HEW. The HEW-compliant STAs 120 and 130 may be, for example, laptop computers, smart phones, tablet computers, printers, machine-type devices such as smart meters, or any other wireless device with or without a user interface.

The HEW-compliant STAs 120 and 130 can be within a range or service area 140 of the HEW AP 125 or 135. The HEW APs 125, 135 and the HEW-compliant STAs 120, 130 may be within a range of each other such that they are subject to interference from each other. The service area 140 can overlap or neighbor service areas (not shown in FIG. 1) of other HEW APs (not shown in FIG. 1). In some usage scenarios of HEW, wireless office and high density access points (APs) with high density user stations (STAs) are supported. In some embodiments, the HEW-compliant STAs 120 and 130, the HEW APs 125 and 135 can transmit and receive communications in accordance with specific communication standards, such as the IEEE 802.11 standards, although the HEW-compliant STAs 120 and 130, and the HEW APs 125 and 135 may also be suitable to transmit and receive communications in accordance with other techniques.

As bandwidth is increased and HEW AP coverages become denser, interference becomes a limiting factor such that performance cannot be further improved while maintaining acceptable levels of quality of service. Various embodiments, therefore, can provide a distributed scheduling and coordination scheme that allows multiple users to share a transmission opportunity (TXOP) or pool of TXOPs in a mutually-satisfactory fashion. As more APs or STAs, or communication pairs thereof, share TXOPs with other APs, STAs, or communication pairs, the overall number of TXOPs available for sharing increases. Embodiments can provide robust and fair sharing algorithms, with low computational overhead. For example, according to some embodiments, high-priority communication pairs are able to use correspondingly larger numbers of the shared TXOPs. Embodiments also permit some communication pairs to refrain from sharing TXOPs in defined situations or conditions.

In some embodiments, a HEW device, for example HEW APs 125, 135 and the HEW-compliant STAs 120, 130, can maintain and track an algorithm variable, hereinafter "Shared_TXOP_Count," that indicates the number of TXOPs that available, at a period or instant of time, to be shared. Communication pairs A, B of devices such as HEW AP 125, 135 or the HEW-compliant STA 120, 130 can share TXOPs in accordance with an algorithm that includes at least two processes. A first process performs seed generation, and a second process uses the seed generated in the first process to determine when to share TXOPs.

A seed generation algorithm, implemented in HEW AP 125, 135 or the HEW-compliant STA 120, 130, will set Shared_TXOP_Count to a value. The value will be set such that a very small percentage (e.g., about 1%) of possible TXOPs available to the communication Pair A, B, of which HEW AP 125, 135 or HEW-compliant STA 120, 130 is a part, will be made available for sharing. Example pseudocode for the seed generation algorithm is shown below in Table 1. The pseudocode is described from view point of HEW-compliant STA 120, although embodiments are not limited thereto and any device operating in the HEW network 100 can perform the algorithm of Table 1:

**Table 1: Seed Generation Pseudocode.**

| |
|---|
| ```
 1: increment TXOP_passed upon getting one TXOP
 2: if TXOP_passed > SeedGenerationThreshold
 3:  if Shared_TxOP_Count < MaxCount then
 4:  {
 5:             Shared_TXOP_Count =Shared_TXOP_Count+1;
 6:             TXOP_passed = TXOP_passed -SeedGenerationThreshold;
 6:  }
``` |

In Table 1, at line 1, when the HEW-compliant STA 120 gains ownership of a TXOP, the HEW-compliant STA 120 will increment TXOP_passed. In line 2, SeedGenerationThreshhold controls the percentage of available TXOPs that can be shared. For example, to share 1% of available TXOPs, the HEW-compliant STA 130 can set SeedGenerationThreshold to 100. At lines 3-6, the HEW-compliant STA 130 will increment Shared_TXOP_Count unless a threshold for sharing (e.g., MaxCount) has been reached. MaxCount can be determined based on criteria such as network conditions, priority level of applications executing on the HEW-compliant STA 120, etc., although embodiments are not limited thereto. The percentage of TXOPs to be shared can also be set or determined based on criteria such as priority level of applications executing on the HEW-compliant STA 120, etc.

HEW AP 125, 135 or the HEW-compliant STA 120, 130 may execute a sharing algorithm using the seed generated in the seed generation algorithm described regarding Table 1. Example pseudocode for the sharing algorithm is shown below in Table 2. The pseudocode is described from view point of the HEW-compliant STA 120, although embodiments are not limited thereto and any device operating in the HEW network 100 can perform the algorithm of Table 2:

**Table 2: Sharing Pseudocode.**

| |
|---|
| ```
 1: if a device shared another's TXOP to perform transmission successfully
 2: {
 3:  if Shared_TXOP_Count < MaxCount
 4:  {
 5:  Shared_TXOP_Count = Shared_TXOP_Count + 1;
 6:  }
 7: }
 8: if device obtains a TXOP
 9: {
 10:  if Shared_TXOP_Count > 0 then
 11:  {
 12:  open TXOP for sharing
 13:  if transmission successful
 14:  {
 15:  decrement Shared_TXOP_Count by one
 16:  }
 17:  if transmission not successful
 18:  {
 19:  decrement Shared_TXOP_Count by two
 20:  }
 21: }
``` |

In Table 2, at lines 1-6, the HEW-compliant STA 120 will increment the Shared_TXOP_Count if the HEW-compliant STA 120 successfully uses another device's TXOP to transmit. At lines 8-20, the HEW-compliant STA 120 performs various operations upon obtaining a TXOP. The HEW-compliant STA 120 may obtain the TXOP in accordance with an enhanced digital channel access (EDCA) protocol although embodiments are not limited thereto.

At lines 10-12, the HEW-compliant STA 120 opens the TXOP for sharing. The HEW-compliant STA 120 may open a TXOP for sharing using medium access control (MAC) layer signaling in accordance with a standard of the Institute of Electrical and Electronics Engineers (IEEE) family of standards. MAC layer signaling can be implemented using one or more processors. For example, the HEW-compliant STA 120 may broadcast a Request to Open Sharing (ROS) and a Confirm to Open Sharing (COS) MAC message that includes information for resource sharing. The ROS message or the COS message, or both the ROS message and COS message, can include transmit power control backoff information to indicate a reduced power level for devices using the shared TXOP. The ROS or COS message can include any other information to be used for sharing the TXOP such as coding scheme information, interference level limits, path loss estimation parameters, etc., although the information that can be included in the ROS or COS message is not limited to any particular set of information.

At lines 13-21, the HEW-compliant STA 120 will decrement Shared_TXOP_Count when the HEW-compliant STA 120 transmits or attempts to transmit. The HEW-compliant STA 120 will decrement Shared_TXOP_Count by a larger number, for example a number larger than 1, if transmission is unsuccessful, because network conditions may be such that fewer TXOPs should be shared.

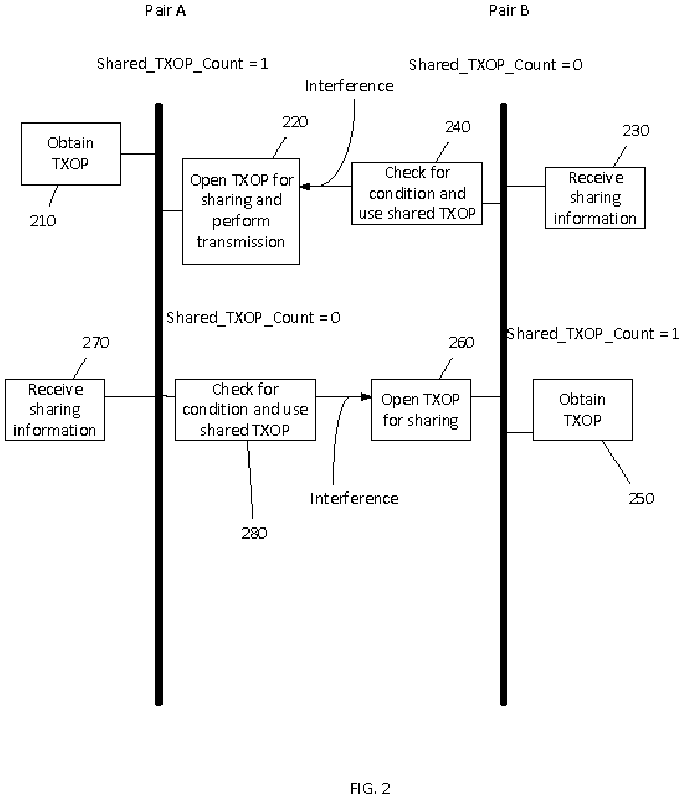

FIG. 2 is a first illustrative example of a mechanism 200 for sharing TXOPs in accordance with some embodiments. For purposes of explaining example embodiments, it will be assumed that Shared_TXOP_Count starts at a value of 1 for Pair A. A corresponding Shared_TXOP_Count starts at zero for Pair B. However, embodiments are not limited to any particular starting value of Shared_TXOP_Count. The Shared_TXOP_Count can be seeded according to algorithms described herein. For example, if a Shared_TXOP_Count is not seeded to have a value of at least 1, other nearby devices will not open TXOPs for sharing and no sharing will take place.

Embodiments are described as being implemented within the HEW-compliant STA 120 or 130, and any device operating in the HEW network 100 can perform functions described with respect to FIG. 2.

In operation 210, the HEW-compliant STA 120 can receive a TXOP. The HEW-compliant STA 120 can receive the TXOP in a message or other signal in accordance with an enhanced digital access (EDCA) protocol, although embodiments are not limited thereto.

In operation 220, in the illustrative example, Pair A can open the TXOP, which was received in operation 210, for sharing. Because one TXOP has been shared, devices of Pair A may decrement Shared_TXOP_Count. In the illustrated example, Shared_TXOP_Count has been decremented to zero. In operation 230, Pair B can receive sharing information broadcast by Pair A. In operation 240, Pair B can check whether interference levels meet conditions broadcast by Pair A, and then use the shared TXOP of Pair B meets that condition. Pair B will then increment Pair B's Shared_TXOP_Count.

Same or similar operations can take place when Pair B gets a TXOP at operation 250, and opens the TXOP for sharing at operation 260. In operation 270, Pair A can receive sharing information at broadcast by Pair B and in operation 280, Pair A can check for interference conditions and use the TXOP.

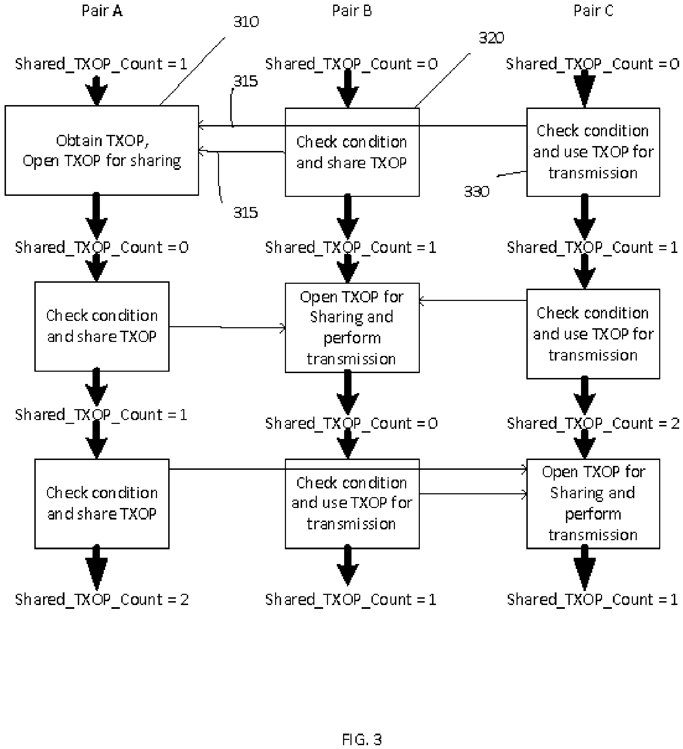

FIG. 3 is a second illustrative example of a mechanism for sharing TXOPs in accordance with some embodiments. Communication Pairs A, B, and C could include, for example, three pairs of phones, within a relatively small area such that interference can occur among the three pairs, although embodiments are not limited thereto. Each time one of the Pairs A, B, C opens a TXOP for sharing, the corresponding Shared_TXOP_Count maintained by a device of that pair is decremented. Each time a TXOP is shared, Shared_TXOP_Count is incremented. When a pair, for example Pair A, opens a TXOP for sharing in operation 310, the other two pairs check for this condition through interference estimation with Pair A. During interference estimation, Pairs B and C will estimate interference levels 315 with Pair A to check whether the interference levels meet conditions broadcast by Pair A. For example, at operation 320, Pair B can check interference conditions and share the TXOP, at which point Pair B can increment Shared_TXOP_Count. Pair C can perform same or similar operations at operation 330.

Pairs can increment Shared_TXOP_Count multiple times, until a limit is reached according to algorithms described with respect to Table 1 and Table 2 herein. Additional operations can occur in a manner the same or similar to that described herein regarding FIG. 2.

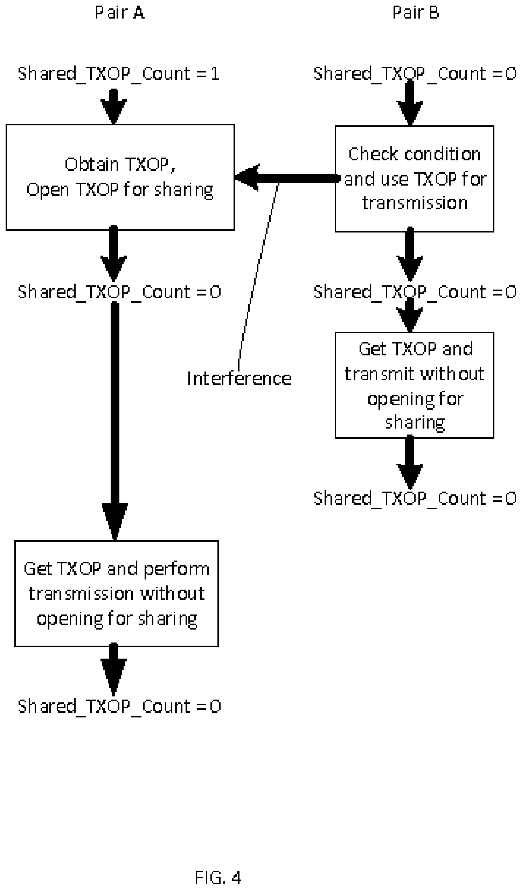

FIG. 4 is a third illustrative example of a mechanism 400 for sharing TXOPs in accordance with some embodiments. FIG. 4 illustrates an instance in which a greedy pair desires to share TXOPs shared by other devices, without sharing any of its own TXOPs. In some embodiments, a pair, for example Pair A, can sense the greediness of another pair in the network, for example Pair B. If Pair A cannot share Pair B's TXOP to increment or increase Pair A's Shared_TXOP_Count, Pair A can refrain from sharing further TXOPs. Pair A can resume sharing after a time interval by executing the seed generation algorithm of Table 1, for example.

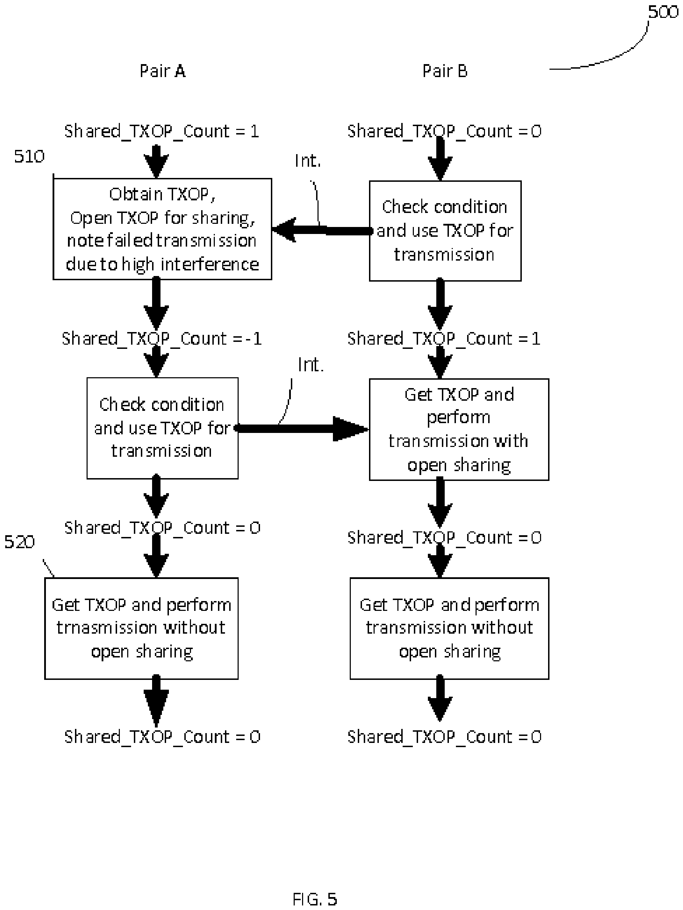

FIG. 5 is a fourth illustrative example of a mechanism 500 for sharing TXOPs in accordance with some embodiments. FIG. 5 illustrates an instance in which a greedy pair transmits at a higher power level than that which is allowed according to information broadcast in ROS and COS messaging described herein. At operation 510, Pair A can obtain a TXOP and open the TXOP for sharing. However, Pair A may note that transmission failed due to, for example, high interference levels. As described herein regarding Table 2, lines 17-20, Pair A will therefore decrement Shared_TXOP_Count by two. If Shared_TXOP_Count is then zero or less, Pair A will refrain from sharing the next obtained TXOP in operation 520.

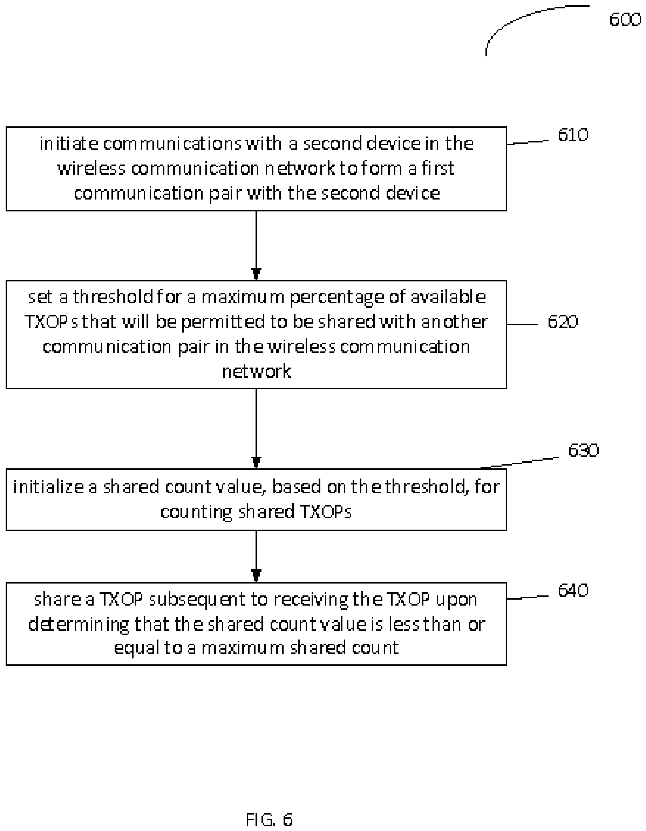

FIG. 6 is a flow chart of a method 600 for sharing TXOPs in accordance with some embodiments. The HEW-compliant STA 120 (FIG. 1) can execute operations of method 600 although embodiments are not limited thereto and operations of method 600 can be executed in any device in the HEW network 100 (FIG. 1).

In operation 610, the HEW-compliant STA 120 can initiate communications with a second device in the wireless communication network to form a first communication pair with the second device. For example, the HEW-compliant STA 120 can initiate communications with HEW AP 125 to form communication Pair A (FIG. 1).

In operation 620, the HEW-compliant STA 120 can set a threshold for a maximum percentage of available TXOPs that will be permitted to be shared with another communication pair in the wireless communication network. For example, the HEW-compliant STA 120 can set a value for MaxCount for use in a seed algorithm described regarding Table 1.

In operation 630, the HEW-compliant STA 120 can initialize a shared count value, based on the threshold, for counting shared TXOPs. For example, the HEW-compliant STA 120 can initialize Shared_TXOP_Count for use in a seed algorithm and sharing algorithm as described regarding Tables 1 and 2.

In operation 640, the HEW-compliant STA 120 can share a TXOP subsequent to receiving the TXOP upon determining that the shared count value is less than or equal to a maximum shared count. As described herein, the TXOP may be received according to an EDCA protocol message although embodiments are not limited thereto.

The HEW-compliant STA 120 may receive notification that another communication pair, for example, Pair B (FIG. 1) has shared a TXOP. The HEW-compliant STA 120 may transmit using the TXOP that has been shared by Pair B subsequent to receiving the notification.

As described regarding FIG. 3 and 4, the HEW-compliant STA 120 may suppress sharing of TXOPs upon detecting that other communication pairs, for example Pair B or other pairs in the HEW network 100, have failed to share a TXOP. The HEW-compliant STA 120 can resume sharing later, for example upon satisfaction of a network transmission quality criterion, such as successful transmission of a number of transmissions, interference level, or any other criteria.

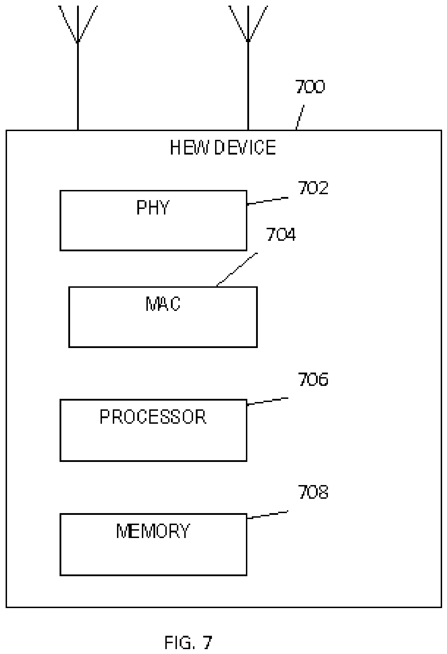

FIG. 7 illustrates a HEW device in accordance with some embodiments. HEW device 700 may be an HEW compliant device that may be arranged to communicate with one or more other HEW devices, such as HEW devices as well as communicate with legacy devices. HEW device 700 may be suitable for operating as a HEW AP 125, 135 (FIG. 1) or a HEW-compliant STA 120, 130 (FIG. 1). In accordance with embodiments, HEW device 700 may include, among other things, physical layer (PHY) 702, medium-access control layer (MAC) 704, one or more processors 706 and memory 708. PHY 702 and MAC 704 may be HEW compliant layers and may be compliant with one or more legacy IEEE 802.11 standards. PHY 702 and MAC 704 can be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, PHY 702 or MAC 704 can be implemented or partially implemented in one or a combination of hardware, firmware, and software. Embodiments may also be implemented as instructions stored on a computer-readable storage device.

The processor 706 may be arranged to receive, select, determine, or provide a threshold for a maximum percentage of available TXOPs that will be permitted to be shared with another communication pair in the HEW network 100. The processor 706 may initialize a shared count value, based on the threshold, for counting shared TXOPs. The processor 706 can suppress the sharing upon detecting that the other communication pair has transmitted using the shared TXOP at a power level higher than that permitted according to a value specified in the sharing notification message. Memory 708 can store the threshold and the shared count value, among other values, variables, or parameters.

Processor 706, or another processor, or MAC layer circuitry implemented on one or more processors, can configure a sharing notification message to initiate sharing of a TXOP of the available TXOPs subsequent to receiving the TXOP, based on the shared count value. PHY 702 circuitry can receive notification that the other communication pair has shared a TXOP and transmit using the TXOP that has been shared by the other communication pair.

In some embodiments, the HEW device 700 may be configured to communicate using OFDM communication signals over a multicarrier communication channel. In some embodiments, HEW device 700 may be configured to receive signals in accordance with specific communication standards, such as the Institute of Electrical and Electronics Engineers (IEEE) standards including IEEE 802.11-2012 and/or 802.11n-2009 standards and/or proposed specifications for WLANs including proposed HEW standards, although the scope of embodiments is not limited in this respect as they may also be suitable to transmit and/or receive communications in accordance with other techniques and standards. In some other embodiments, HEW device 700 may be configured to receive signals that were transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, HEW device 700 may be part of a portable wireless communication device, such as a personal digital assistant (PDA), a laptop or portable computer with wireless communication capability, a web tablet, a wireless telephone or smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, HEW device 700 may include one or more of a keyboard, a display, a nonvolatile memory port, multiple antennas, a graphics processor, an application processor, speakers, and other mobile device elements. The display may be an LCD screen including a touch screen.

The antennas may comprise one or more directional or omnidirectional antennas, including, for example, dipole antennas, monopole antennas, patch antennas, loop antennas, microstrip antennas, or other types of antennas suitable for transmission of RF signals. In some multiple-input multiple-output (MIMO) embodiments, the antennas may be effectively separated to take advantage of spatial diversity and the different channel characteristics that may result between each of antennas and the antennas of a transmitting station.

Although HEW device 700 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of HEW device 700 may refer to one or more processes operating on one or more processing elements.

Embodiments may be implemented in one or a combination of hardware, firmware, and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

In accordance with embodiments, interference by high-power transmissions is reduced or eliminated by limiting high-power transmissions to one portion of a beacon period, and by limiting low-power transmissions to other portions of a beacon period. Backward compatibility is maintained at least because interference reciprocity is maintained in that transmissions occur at same or similar power levels during corresponding time allocations allocated to high or low-power transmissions.

### Additional Notes & Examples:

Example 1 includes subject matter (such as a method or means for performing acts) for operating in a wireless communication network, including initiating communications with a second device in the wireless communication network to form a first communication pair with the second device, setting a threshold for a maximum percentage of available transmission opportunities (TXOPs) that will be permitted to be shared with another communication pair in the wireless communication network, initializing a shared count value, based on the threshold, for counting shared TXOPs, and sharing a TXOP of the available TXOPs subsequent to receiving the TXOP and upon determining that the shared count value is less than or equal to a maximum shared count.
Example 2 may optionally include the subject matter of Example 1, and further comprising receiving notification that the other communication pair has shared a TXOP, and transmitting using the TXOP that has been shared by the other communication pair subsequent to receiving the notification.
Example 3 may optionally include the subject matter of Examples 1-2, and further comprising suppressing the sharing upon detecting that the other communication pair has failed to share a TXOP.
Example 4 may optionally include the subject matter of Example 3, and further comprising resuming sharing upon satisfaction of a network transmission quality criterion.
Example 5 may optionally include the subject matter of Example 4, wherein the criterion includes successful transmission of a number of transmissions.
Example 6 may optionally include the subject matter of Examples 1-5, further comprising determining a maximum shared count of TXOPs that will be permitted to be shared based on a priority level of applications executing on the first device.
Example 7 may optionally include the subject matter of Examples 1-6, further comprising determining a value for the threshold based on a priority level of applications executing on the first device.
Example 8 may optionally include the subject matter of Examples 1-7, wherein the sharing includes transmitting a Request to Open Sharing (ROS) in accordance with a standard of the Institute of Electrical and Electronics Engineers (IEEE) family of standards.
Example 9 may optionally include the subject matter of Example 8, further comprising suppressing the sharing upon detecting that the other communication pair has transmitted using the shared TXOP at a power level higher than that permitted according to a value specified in the ROS.
Example 10 may include subject matter (such as a device, apparatus, wireless communication (STA), client or system) including physical layer (PHY) circuitry to initiate communications with a second STA in the wireless communication network to form a first communication pair with the second STA, one or more processors to determine a threshold for a maximum percentage of available transmission opportunities (TXOPs) that will be permitted to be shared with another communication pair in the wireless communication network , to initialize a shared count value, based on the threshold, for counting shared TXOPs, and to configure a sharing notification message to initiate sharing of a TXOP of the available TXOPs subsequent to receiving the TXOP, based on the shared count value.
Example 11 may optionally include the subject matter of Example 10, wherein the PHY circuitry is further arranged to receive notification that the other communication pair has shared a TXOP and transmit using the TXOP that has been shared by the other communication pair.
Example 12 may optionally include the subject matter of Example 11, wherein the one or more processors are further arranged to suppress sharing upon detecting that the other communication pair has failed to share at least one TXOP; and resume sharing, at a point subsequent to suppressing the sharing, upon successful transmission of a number of transmissions.
Example 13 may optionally include the subject matter of Examples 10-12, wherein the one or more processors are further arranged to suppress the sharing upon detecting that the other communication pair has transmitted using the shared TXOP at a power level higher than that permitted according to a value specified in the sharing notification message.
Example 14 may include subject matter (such as a device, apparatus, access point (AP), client or system) including one or more antennas to initiate communications with a second STA in the wireless communication network to form a first communication pair with the second STA, processing circuitry to determine a threshold for a maximum percentage of available transmission opportunities (TXOPs) that will be permitted to be shared with another communication pair in the wireless communication network, initialize a shared count value, based on the threshold, for counting shared TXOPs, and configure a sharing notification message to initiate sharing of a TXOP of the available TXOPs subsequent to receiving the TXOP, based on the shared count value; and memory to store the threshold and the shared count value.
Example 15 may optionally include the subject matter of Example 14, wherein the processing circuitry is further arranged to determine a maximum number of TXOPs that will be permitted to be shared based on a priority level of applications executing on the system, increment the shared count value when the TXOP is shared, and suppress sharing of additional TXOPs when the shared count value exceeds the maximum number of TXOPs that will be permitted to be shared.
Example 16 may optionally include the subject matter of Examples 14-15, wherein the processing circuitry is further arranged to detect that the other communication pair has shared a TXOP, and configure the one or more antennas to transmit using the TXOP shared by the other communication pair.
Example 17 may optionally include the subject matter of Examples 14-16, wherein the processing circuitry is further arranged to detect that the other communication pair has failed to share at least one TXOP, and suppress sharing for a time period subsequent to detecting that the other communication pair has failed to share at least one TXOP.
Example 18 may include subject matter (such as means for performing acts or machine readable medium including instructions that, when executed by a first user station (STA), cause the STA to perform acts including initiating communications with a second STA in the wireless communication network to form a first communication pair with the second STA, setting a threshold for a maximum percentage of available transmission opportunities (TXOPs) that will be permitted to be shared with another communication pair in the wireless communication network, initializing a shared count value, based on the threshold, for counting shared TXOPs, and sharing a TXOP of the available TXOPs subsequent to receiving the TXOP, when the shared count value is less than or equal to a maximum shared count.
Example 19 may optionally include the subject matter of Example 18, further comprising instructions to increment the shared count value subsequent to sharing the TXOP, and suppress sharing of additional TXOPs if the shared count value exceeds a maximum, the maximum being determined based on priority levels of applications executing on the STA.
Example 20 may optionally include the subject matter of Examples 18-19, further comprising instructions to suppress sharing of TXOPs upon determining that the other communication pair has failed to share at least one TXOP or that the other communication pair transmitted using a shared TXOP at a higher power level than that permitted by a configuration message for notifying the other communication pair of availability of the shared TXOP.

## Claims

1. A wireless communication station, STA (120, 700), for operating in a wireless communication network (100), comprising:
physical layer, PHY, circuitry (702) to
initiate communications with a second STA (125) in the wireless communication network (100) to form a first communication pair with the second STA (125); and
one or more processors (706) characterised to
select a threshold for a maximum percentage of available transmission opportunities, TXOPs, that will be permitted to be shared with another communication pair (130, 135) in the wireless communication network (100), and
initialize a shared count value, based on the threshold, for counting shared TXOPs; and
a medium access control, MAC, layer (704) to configure a sharing notification message to initiate sharing of a TXOP of the available TXOPs subsequent to receiving the TXOP, based on the shared count value.

2. The STA of claim 1, wherein the PHY layer circuitry (702) is further arranged to:
receive notification that the other communication pair (130, 135) has shared a TXOP; and transmit using the TXOP that has been shared by the other communication pair (130, 135).

3. The STA of claim 2, wherein the one or more processors (706) are further arranged to:
suppress sharing upon detecting that the other communication pair (130, 135) has failed to share at least one TXOP; and
resume sharing, at a point subsequent to suppressing the sharing, upon successful transmission of a number of transmissions.

4. The STA of claim 1, wherein the one or more processors (706) are further arranged to suppress the sharing upon detecting that the other communication pair (130, 135) has transmitted using the shared TXOP at a power level higher than that permitted according to a value specified in the sharing notification message.

5. A method (600), performed by a first device (120, 700), for operating in a wireless communication network (100), the method comprising:
initiating (610) communications with a second device (125) in the wireless communication network to form a first communication pair with the second device (125); **characterised by** setting (620) a threshold for a maximum percentage of available transmission opportunities, TXOPs, that will be permitted to be shared with another communication pair (130, 135) in the wireless communication network;
initializing (630) a shared count value, based on the threshold, for counting shared TXOPs; and
sharing (640) a TXOP of the available TXOPs subsequent to receiving the TXOP and upon determining that the shared count value is less than or equal to a maximum shared count.

6. The method of claim 5, further comprising:
receiving a notification that the other communication pair (130, 135) has shared a TXOP; and
transmitting using the TXOP that has been shared by the other communication pair (130, 135) subsequent to receiving the notification.

7. The method of claim 5, further comprising:
suppressing the sharing upon detecting that the other communication pair (130, 135) has failed to share a TXOP.

8. The method of claim 7, further comprising:
resuming sharing upon satisfaction of a network transmission quality criterion, wherein the network transmission quality criterion includes successful transmission of a number of transmissions.

9. The method of claim 5, further comprising:
determining a maximum shared count of TXOPs that will be permitted to be shared based on a priority level of applications executing on the first device (120).

10. The method of claim 1, wherein the sharing includes transmitting a Request to Open Sharing, ROS, in accordance with a standard of the Institute of Electrical and Electronics Engineers, IEEE, family of standards.

11. The method of claim 10, further comprising:
suppressing the sharing upon detecting that the other communication pair (130, 135) has transmitted using the shared TXOP at a power level higher than that permitted according to a value specified in the ROS.

12. A system comprising:
one or more antennas arranged to initiate communications with a second STA (125) in the wireless communication network (100) to form a first communication pair with the second STA (125);
one or more processors (706) characterised to
determine a threshold for a maximum percentage of available transmission opportunities, TXOPs, that will be permitted to be shared with another communication pair (130, 135) in the wireless communication network (100),
initialize a shared count value, based on the threshold, for counting shared TXOPs, and
configure a sharing notification message to initiate sharing of a TXOP of the available TXOPs subsequent to receiving the TXOP, based on the shared count value; and
a memory (708) to store the threshold and the shared count value.

13. The system of claim 12, wherein the one or more processors (706) are further arranged to:
determine a maximum number of TXOPs that will be permitted to be shared based on a priority level of applications executing on the system;
increment the shared count value when the TXOP is shared; and
suppress sharing of additional TXOPs when the shared count value exceeds the maximum number of TXOPs that will be permitted to be shared.

14. The system of claim 12, wherein the one or more processors (706) are arranged to
detect that the other communication pair (130, 135) has shared a TXOP, and configure the one or more antennas to transmit using the TXOP shared by the other communication pair (130, 135).

15. The system of claim 14, wherein the one or more processors (706) are arranged to
detect that the other communication pair (130, 135) has failed to share at least one TXOP; and
suppress sharing for a time period subsequent to detecting that the other communication pair (130, 135) has failed to share at least one TXOP.

## Patentansprüche

1. Drahtlose Kommunikationsstation, STA (120, 700), zum Betreiben in einem drahtlosen Kommunikationsnetzwerk (100), die Folgendes umfasst:
eine physische Schicht(PHY)-Schaltung (702) zum
Initiieren einer Kommunikation mit einer zweiten STA (125) im drahtlosen Kommunikationsnetzwerk (100), um ein erstes Kommunikationspaar mit der zweiten STA (125) zu bilden; und
einen oder mehrere Prozessoren (706), gekennzeichnet zum
Auswählen eines Schwellwerts für einen maximalen Prozentwert verfügbarer Übertragungsgelegenheiten, TXOPs, deren gemeinsame Verwendung mit einem anderen Kommunikationspaar (130, 135) im drahtlosen Kommunikationsnetzwerk (100) zugelassen wird, und
Initialisieren eines Zählwerts zur gemeinsamen Verwendung auf Basis des Schwellwerts zum Zählen von gemeinsam verwendeten TXOPs und
eine Medienzugriffssteuerungs(MAC)-Schicht (704) zum Auslegen einer Benachrichtigungsnachricht zur gemeinsamen Verwendung, um nach Empfangen der TXOP auf Basis des Zählwerts zur gemeinsamen Verwendung eine gemeinsame Verwendung einer TXOP der verfügbaren TXOPs zu initiieren.

2. STA nach Anspruch 1, wobei die PHY-Schichtschaltung (702) ferner zu Folgendem angeordnet ist:
Empfangen einer Benachrichtigung, dass das andere Kommunikationspaar (130, 135) eine TXOP gemeinsam verwendet hat; und
Übertragen unter Verwendung der TXOP, die von dem anderen Kommunikationspaar (130, 135) gemeinsam verwendet wurde.

3. STA nach Anspruch 2, wobei der eine oder die mehreren Prozessoren (706) ferner zu Folgendem angeordnet sind:
nach Detektieren, dass das andere Kommunikationspaar (130, 135) nicht mindestens eine TXOP gemeinsam verwendet hat, Unterdrücken einer gemeinsamen Verwendung und
an einem Punkt nach Unterdrücken der gemeinsamen Verwendung Wiederaufnehmen einer gemeinsamen Verwendung nach einer erfolgreichen Übertragung einer Anzahl von Übertragungen.

4. STA nach Anspruch 1, wobei der eine oder die mehreren Prozessoren (706) ferner angeordnet sind, nach Detektieren, dass das andere Kommunikationspaar (130, 135) unter Verwendung der gemeinsam verwendeten TXOP mit einem Leistungspegel, der gemäß einem Wert, der in der Benachrichtigungsnachricht zur gemeinsamen Verwendung spezifiziert ist, übertragen hat, höher ist als der zugelassene, die gemeinsame Verwendung zu unterdrücken.

5. Verfahren (600), zum Betreiben in einem drahtlosen Kommunikationsnetzwerk (100), das von einer ersten Vorrichtung (120, 700) durchgeführt wird, wobei das Verfahren Folgendes umfasst:
Initiieren (610) einer Kommunikation mit einer zweiten Vorrichtung (125) im drahtlosen Kommunikationsnetzwerk, um ein erstes Kommunikationspaar mit der zweiten Vorrichtung (125) zu bilden;
**gekennzeichnet durch**
Einstellen (620) eines Schwellwerts für einen maximalen Prozentwert verfügbarer Übertragungsgelegenheiten, TXOPs, deren gemeinsame Verwendung mit einem anderen Kommunikationspaar (130, 135) im drahtlosen Kommunikationsnetzwerk zugelassen wird;
Initialisieren (630) eines Zählwerts zur gemeinsamen Verwendung auf Basis des Schwellwerts zum Zählen von gemeinsam verwendeten TXOPs und
gemeinsames Verwenden (640) einer TXOP der verfügbaren TXOPs nach Empfangen der TXOP und nach Bestimmen, dass der Zählwert zur gemeinsamen Verwendung kleiner ist als eine Zählung zur gemeinsamen Verwendung oder mit dieser gleich ist.

6. Verfahren nach Anspruch 5, das ferner Folgendes umfasst:
Empfangen einer Benachrichtigung, dass das andere Kommunikationspaar (130, 135) eine TXOP gemeinsam verwendet hat; und
Übertragen unter Verwendung der TXOP, die von dem anderen Kommunikationspaar (130, 135) gemeinsam verwendet wurde, nach Empfangen der Benachrichtigung.

7. Verfahren nach Anspruch 5, das ferner Folgendes umfasst:
nach Detektieren, dass das andere Kommunikationspaar (130, 135) keine TXOP gemeinsam verwendet hat, Unterdrücken der gemeinsamen Verwendung.

8. Verfahren nach Anspruch 7, das ferner Folgendes umfasst:
Wiederaufnehmen einer gemeinsamen Verwendung nach Erfüllung eines Netzwerkübertragungsqualitätskriteriums, wobei das Netzwerkübertragungsqualitätskriterium eine erfolgreiche Übertragung einer Anzahl von Übertragungen beinhaltet.

9. Verfahren nach Anspruch 5, das ferner Folgendes umfasst:
Bestimmen einer maximalen Zählung zur gemeinsamen Verwendung von TXOPs, deren gemeinsame Verwendung auf Basis einer Prioritätsstufe von Anwendungen, die auf der ersten Vorrichtung (120) ausgeführt werden, zugelassen wird.

10. Verfahren nach Anspruch 1, wobei die gemeinsame Verwendung das Übertragen einer Anforderung zum Eröffnen der gemeinsamen Verwendung, ROS, gemäß einer Norm der Familie von Normen des Institute of Electrical and Electronics Engineers (IEEE) beinhaltet.

11. Verfahren nach Anspruch 10, das ferner Folgendes umfasst:
nach Detektieren, dass das andere Kommunikationspaar (130, 135) unter Verwendung der gemeinsam verwendeten TXOP mit einem Leistungspegel, der gemäß einem Wert, der in der ROS spezifiziert ist, übertragen hat, höher ist als der zugelassene, Unterdrücken der gemeinsamen Verwendung.

12. System, das Folgendes umfasst:
eine oder mehrere Antennen, die angeordnet sind, eine Kommunikation mit einer zweiten STA (125) im drahtlosen Kommunikationsnetzwerk (100) zu initiieren, um ein erstes Kommunikationspaar mit der zweiten STA (125) zu bilden;
einen oder mehrere Prozessoren (706), gekennzeichnet zum
Bestimmen eines Schwellwerts für einen maximalen Prozentwert verfügbarer Übertragungsgelegenheiten, TXOPs, deren gemeinsame Verwendung mit einem anderen Kommunikationspaar (130, 135) im drahtlosen Kommunikationsnetzwerk (100) zugelassen wird,
Initialisieren eines Zählwerts zur gemeinsamen Verwendung auf Basis des Schwellwerts zum Zählen von gemeinsam verwendeten TXOPs und
Auslegen einer Benachrichtigungsnachricht zur gemeinsamen Verwendung, um nach Empfangen der TXOP auf Basis des Zählwerts zur gemeinsamen Verwendung eine gemeinsame Verwendung einer TXOP der verfügbaren TXOPs zu initiieren; und
einen Speicher (708) zum Speichern des Schwellwerts und des Zählwerts zur gemeinsamen Verwendung.

13. System nach Anspruch 12, wobei der eine oder die mehreren Prozessoren (706) ferner zu Folgendem angeordnet sind:
Bestimmen einer maximalen Anzahl von TXOPs, deren gemeinsame Verwendung auf Basis einer Prioritätsstufe von Anwendungen, die im System ausgeführt werden, zugelassen wird;
Erhöhen des Zählwerts zur gemeinsamen Verwendung, wenn die TXOP gemeinsam verwendet wird; und
Unterdrücken einer gemeinsamen Verwendung von zusätzlichen TXOPs, wenn der Zählwert zur gemeinsamen Verwendung die maximale Anzahl von TXOPs, deren gemeinsame Verwendung zugelassen wird, überschreitet.

14. System nach Anspruch 12, wobei der eine oder die mehreren Prozessoren (706) zu Folgendem angeordnet sind
Detektieren, dass das andere Kommunikationspaar (130, 135) eine TXOP gemeinsam verwendet hat, und Auslegen der einen oder der mehreren Antennen, um unter Verwendung der TXOP, die vom anderen Kommunikationspaar (130, 135) gemeinsam verwendet wird, zu übertragen.

15. System nach Anspruch 14, wobei der eine oder die mehreren Prozessoren (706) zu Folgendem angeordnet sind
Detektieren, dass das andere Kommunikationspaar (130, 135) nicht mindestens eine TXOP gemeinsam verwendet hat; und
Unterdrücken einer gemeinsamen Verwendung für eine Zeitperiode nach Detektieren, dass das andere Kommunikationspaar (130, 135) nicht mindestens eine TXOP gemeinsam verwendet hat.

## Revendications

1. Station de communication sans fil, STA (120, 700), destinée à fonctionner dans un réseau de communication sans fil (100), comprenant :
des circuits (702) de couche physique, PHY, pour
démarrer des communications avec une seconde STA (125) dans le réseau de communication sans fil (100) afin de former une première paire de communication avec la seconde STA (125) ; et
un ou plusieurs processeurs (706) caractérisés pour
sélectionner un seuil pour un pourcentage maximum d'opportunités de transmission, TXOP, disponibles qui auront l'autorisation d'être partagées avec une autre paire de communication (130, 135) dans le réseau de communication sans fil (100), et
initialiser une valeur de décompte partagé, basée sur le seuil, pour compter les TXOP partagées ; et
une couche (704) de contrôle d'accès au support, MAC, pour configurer un message de notification partagé pour démarrer un partage d'une TXOP parmi les TXOP disponibles après la réception de la TXOP, sur la base de la valeur de décompte partagé.

2. STA selon la revendication 1, dans laquelle les circuits (702) de couche PHY sont en outre conçus pour :
recevoir une notification selon laquelle l'autre paire de communication (130, 135) a partagé une TXOP ; et transmettre à l'aide de la TXOP qui a été partagée par l'autre paire de communication (130, 135).

3. STA selon la revendication 2, dans laquelle le ou les processeurs (706) sont en outre conçus pour :
supprimer le partage lors de la détection que l'autre paire de communication (130, 135) a échoué dans le partage d'au moins une TXOP ; et
reprendre le partage, en un point après la suppression du partage, lorsque la transmission d'un certain nombre de transmissions a réussi.

4. STA selon la revendication 1, dans laquelle le ou les processeurs (706) sont en outre conçus pour supprimer le partage lors de la détection que l'autre paire de communication (130, 135) a transmis à l'aide de la TXOP partagée à un niveau de puissance supérieur à celui autorisé en fonction d'une valeur spécifiée dans le message de notification de partage.

5. Procédé (600), exécuté par un premier dispositif (120, 700), destiné à fonctionner dans un réseau de communication sans fil (100), le procédé consistant à :
démarrer (610) des communications avec un second dispositif (125) dans le réseau de communication sans fil afin de former une première paire de communication avec le second dispositif (125) ;
**caractérisé par** les étapes consistant à
paramétrer (620) un seuil pour un pourcentage maximum d'opportunités de transmission, TXOP, disponibles qui auront l'autorisation d'être partagées avec une autre paire de communication (130, 135) dans le réseau de communication sans fil ;
initialiser (630) une valeur de décompte partagé, basée sur le seuil, pour compter les TXOP partagés ; et
partager (640) une TXOP parmi les TXOP disponibles après la réception de la TXOP et lors de la détermination que la valeur de décompte partagé est inférieure ou égale à un décompte partagé maximum.

6. Procédé selon la revendication 5, consistant en outre à :
recevoir une notification que l'autre paire de communication (130, 135) a partagé une TXOP ; et
transmettre à l'aide de la TXOP qui a été partagée par l'autre paire de communication (130, 135) après la réception de la notification.

7. Procédé selon la revendication 5, consistant en outre à :
supprimer le partage lors de la détection que l'autre paire de communication (130, 135) a échoué dans le partage d'une TXOP.

8. Procédé selon la revendication 7, consistant en outre à :
reprendre le partage lors de la satisfaction d'un critère de qualité de la transmission réseau, le critère de qualité de la transmission réseau comprenant la transmission réussie d'un certain nombre de transmissions.

9. Procédé selon la revendication 5, consistant en outre à :
déterminer un décompte partagé maximum de TXOP qui auront l'autorisation d'être partagées sur la base d'un niveau de priorité d'applications s'exécutant sur le premier dispositif (120).

10. Procédé selon la revendication 1, dans lequel le partage consiste à transmettre une demande d'ouverture pour partage, ROS, conformément à une norme de l'ensemble de normes de l'Institute of Electrical and Electronics Engineers, IEEE.

11. Procédé selon la revendication 10, consistant en outre à :
supprimer le partage lors de la détection que l'autre paire de communication (130, 135) a transmis à l'aide de la TXOP partagée à un niveau de puissance supérieur à celui autorisé en fonction d'une valeur spécifiée dans la ROS.

12. Système comprenant :
une ou plusieurs antennes conçues pour démarrer des communications avec une seconde STA (125) dans le réseau de communication sans fil (100) afin de former une première paire de communication avec la seconde STA (125) ;
un ou plusieurs processeurs (706) caractérisés pour
déterminer un seuil pour un pourcentage maximum d'opportunités de transmission, TXOP, disponibles qui auront l'autorisation d'être partagées avec une autre paire de communication (130, 135) dans le réseau de communication sans fil (100),
initialiser une valeur de décompte partagé, basée sur le seuil, pour compter les TXOP partagées, et
configurer un message de notification de partage pour démarrer un partage d'une TXOP parmi les TXOP disponibles après la réception de la TXOP, sur la base de la valeur de décompte partagé ; et
une mémoire (708) pour mémoriser le seuil et la valeur de décompte partagé.

13. Système selon la revendication 12, dans lequel le ou les processeurs (706) sont en outre conçus pour :
déterminer un nombre maximum de TXOP qui auront l'autorisation d'être partagées sur la base d'un niveau de priorité d'applications s'exécutant sur le système ;
incrémenter la valeur de décompte partagé lorsque la TXOP est partagée ; et
supprimer le partage d'autres TXOP lorsque la valeur de décompte partagé dépasse le nombre maximum de TXOP qui auront l'autorisation d'être partagées.

14. Système selon la revendication 12, dans lequel le ou les processeurs (706) sont conçus pour
détecter que l'autre paire de communication (130, 135) a partagé une TXOP, et
configurer la ou les antennes pour transmettre à l'aide de la TXOP partagée par l'autre paire de communication (130, 135).

15. Système selon la revendication 14, dans lequel le ou les processeurs (706) sont conçus pour
détecter que l'autre paire de communication (130, 135) a échoué dans le partage d'au moins une TXOP ; et
supprimer le partage pendant une période temporelle après la détection que l'autre paire de communication (130, 135) a échoué dans le partage d'au moins une TXOP.
